# EUROPÄISCHE PATENTANMELDUNG

(11) **EP 4 059 713 A1**
(43) Veröffentlichungstag der Anmeldung: **21.09.2022**
(21) Anmeldenummer: 21020147.1
(22) Anmeldetag: 15.03.2021
(51) Int. Cl.: B33Y 80/00, B29C 67/00, F28D 21/00

(54) **VERFAHREN ZUM HERSTELLEN EINER TECHNISCHEN VORRICHTUNG**

(71) Anmelder: Linde GmbH, 82049 Pullach (DE)
(72) Erfinder: Aigner, Herbert, 84367 Reut-Taubenbach (DE); Hölzl, Reinhold, 82538 Geretsried (DE); Englert, Thomas, 82205 Gilching (DE)
(74) Vertreter: Meilinger, Claudia Sabine

(57) **Zusammenfassung**

Die vorliegende Erfindung betrifft ein Verfahren zum Herstellen einer technischen Vorrichtung (100), wobei die technische Vorrichtung aus wenigstens einem ersten Bauteil (2, 3) und wenigstens einem zweiten Bauteil (5, 6, 7, 8) und insbesondere weiteren Bauteilen (4) gefertigt wird, wobei das wenigstens eine erste Bauteil (2, 3) zumindest zum Teil unter Verwendung eines ersten additiven Fertigungsverfahrens hergestellt wird und wobei das wenigstens eine zweite Bauteil (5, 6, 7, 8) zumindest zum Teil unter Verwendung eines zweiten additiven Fertigungsverfahrens hergestellt wird.

## Beschreibung

Die Erfindung betrifft ein Verfahren zum Herstellen einer technischen Vorrichtung sowie eine entsprechend hergestellte technische Vorrichtung.

### Stand der Technik

Technische Vorrichtungen sind als Einheiten oder System verschiedener Einheiten zum Ausführen eines technischen Prozesses zu verstehen, insbesondere eines verfahrens-, regelungs- und/oder steuerungstechnischen Prozesses, und können beispielsweise als Maschinen, Apparate, Anlagen usw. ausgebildet sein.

Derartige technische Vorrichtungen umfassen zumeist eine Vielzahl verschiedener Bauteile. Zur Herstellung bzw. Fertigung derartiger technischen Vorrichtungen werden zumeist die einzelnen, verschiedenen Bauteile mittels Fertigungsverfahren wie Urformen oder Umformen zunächst individuell hergestellt und daraufhin zu der technischen Vorrichtung zusammengesetzt bzw. montiert.

Beispielsweise kann eine verfahrenstechnische Vorrichtung wie ein Wärmetauscher Struktur- bzw. Lamellenbleche, Verteiler bzw. Header, Stutzen usw. als Bauteile aufweisen. Eine verfahrenstechnische Vorrichtung in Form einer Kolonne kann beispielsweise verschiedene Verdampfer, Kondensatoren, Sieb-, Glocken- oder Ventilböden usw. als Bauteile umfassen.

Die vorliegende Erfindung stellt sich die Aufgabe, die Herstellung einer technischen Vorrichtung zu verbessern.

### Offenbarung der Erfindung

Vor diesem Hintergrund schlägt die vorliegende Erfindung ein Verfahren zum Herstellen einer technischen Vorrichtung sowie eine technische Vorrichtung mit den Merkmalen der unabhängigen Patentansprüche vor. Ausgestaltungen sind jeweils Gegenstand der abhängigen Patentansprüche und der nachfolgenden Beschreibung.

Als technische Vorrichtung sei in diesem Zusammenhang insbesondere eine Einheit oder ein System verschiedener Einheiten zu verstehen zum Ausführen eines technischen Prozesses, insbesondere eines verfahrens-, regelungs- und/oder steuerungstechnischen Prozesses. Die technische Vorrichtung kann insbesondere als eine Maschine ausgebildet sein, also insbesondere als eine Vorrichtung zur Energie- bzw. Kraftumsetzung, und/oder als ein Apparat, also insbesondere eine Vorrichtung zur Stoff- bzw. Materieumsetzung. Ferner kann die technische Vorrichtung auch insbesondere als eine Anlage ausgebildet sein, also insbesondere als ein System aus einer Vielzahl von Komponenten, die jeweils beispielsweise Maschinen und/oder Apparate sein können.

Die technische Vorrichtung wird aus wenigstens einem ersten Bauteil und wenigstens einem zweiten Bauteil und insbesondere weiteren Bauteilen gefertigt. Insbesondere werden diese verschiedenen Bauteile als Komponenten bzw. (Einzel-) Teile der technischen Vorrichtung individuell gefertigt und zu der technischen Vorrichtung zusammengesetzt, montiert bzw. gefertigt.

Im Rahmen des vorliegenden Verfahrens wird das wenigstens eine erste Bauteil zumindest zum Teil unter Verwendung eines ersten additiven Fertigungsverfahrens hergestellt bzw. gefertigt und das wenigstens eine zweite Bauteil wird zumindest zum Teil unter Verwendung eines von dem ersten additiven Fertigungsverfahren unterschiedlichen zweiten additiven Fertigungsverfahrens hergestellt bzw. gefertigt.

Additive Fertigung ist im Allgemeinen ein Herstellungsverfahren, bei dem ein dreidimensionales Objekt bzw. eine dreidimensionale Struktur durch konsekutives Hinzufügen eines Werkstoffs Schicht für Schicht erzeugt wird. Dabei wird nacheinander eine neue Werkstoffschicht aufgetragen, verfestigt und fest mit den darunter liegenden Schichten verbunden, z.B. mit Hilfe eines Lasers, Elektronenstrahls oder Lichtbogens. Der Werkstoff kann beispielsweise in Pulverform oder auch in Form von Drähten oder Bändern auftragen werden.

Im Rahmen der vorliegenden Erfindung werden unterschiedliche additive Fertigungsverfahren verwendet, um unterschiedliche Bauteile der technischen Vorrichtung herzustellen. So kann beispielsweise bei einem der beiden additiven Fertigungsverfahren ein Werkstoff schichtweise aufgebracht und beispielsweise mittels eines Laser- und/oder Elektronenstrahls beaufschlagt werden. Im Zuge des anderen der beiden additiven Fertigungsverfahren kann beispielsweise ein Werkstoff mittels eines Lichtbogens beaufschlagt werden.

Der vorliegenden Erfindung liegt die Erkenntnis zugrunde, dass mittels unterschiedlicher additiver Fertigungsverfahren Bauteile mit unterschiedlichen, individuellen Werkstoffeigenschaften erzeugt werden können. Zur Herstellung verschiedener Bauteile der technischen Vorrichtung werden daher individuelle additive Fertigungsverfahren verwendet, insbesondere um spezielle (Werkstoff-) Eigenschaften der jeweiligen Bauteile zu erzeugen, zweckmäßigerweise damit die jeweiligen Bauteile im späteren Betrieb der technischen Vorrichtung individuellen Anforderungen genügen und spezifischen Belastungen standhalten können. Insbesondere kann das erste bzw. zweite additive Fertigungsverfahren daher in Abhängigkeit von Belastungen, Anforderungen, Anwendungszwecken usw. der jeweiligen ersten bzw. zweiten Bauteile in der technischen Vorrichtung ausgewählt werden. Beispielsweise können mittels einem der beiden additiven Fertigungsverfahren jeweilige Bauteile erzeugt werden, die hohen Drücken, Temperaturen oder thermischen bzw. thermodynamischen Belastungen standhalten können. Mittels des anderen additiven Fertigungsverfahrens können beispielsweise Bauteile hergestellt werden, die eine strukturelle Integrität gewähren können und z.B. hohen mechanischen Belastungen und mechanischen Spannungen wie Scherkräften, Zugkräften usw. standhalten können.

Durch die Verwendung verschiedener additiver Fertigungsverfahren kann die Herstellung der technischen Vorrichtung durch hohe Flexibilität, Individualität und Effektivität verbessert werden. Insbesondere können die jeweiligen, individuellen Vorteile verschiedener additiver Fertigungsverfahren kombiniert werden und etwaige Nachteile können ausgeglichen werden. Einzelne Bauteile der technischen Vorrichtung können durch Verwendung des jeweiligen additiven Fertigungsverfahrens auf einfache Weise an ihre individuellen Anforderungen und Belastungen angepasst werden. Leistungsfähigkeit und Lebensdauer der einzelnen Bauteile sowie der gesamten technischen Vorrichtung können verbessert werden. Ferner erlauben es die additiven Fertigungsverfahren, die Form der jeweiligen Bauteile flexibel und individuell anzupassen, wodurch eine hohe Flexibilität und Individualisierbarkeit in der Gestaltung der Bauteile und der technischen Vorrichtung erreicht werden kann. Durch Verwendung additiver Fertigungsverfahren ist insbesondere keine Beschränkung der jeweiligen Bauteile auf bestimmte geometrische Formen gegeben. Ferner besteht beispielsweise die Möglichkeit, die technische Vorrichtung bzw. die einzelnen Bauteile aus verschiedenen Metallen zu fertigen, z.B. AI, Ni, Fe, Cu, Ti, beispielsweise abhängig von vorgegebenen Anforderung und ferner beispielsweise auf Kundenwünsche bezogen.

Als das wenigstens eine erste Bauteil bzw. das wenigstens eine zweite Bauteil kann jeweils insbesondere eine Vielzahl gleicher bzw. baugleicher Bauteile mittels desselben additiven Fertigungsverfahrens hergestellt werden. Ferner kann als das wenigstens eine erste Bauteil bzw. als das wenigstens eine zweite Bauteil jeweils auch eine Vielzahl unterschiedlicher Bauteile hergestellt werden, also jeweils eine Vielzahl nicht-baugleicher Bauteile, welche dennoch auf dieselbe Weise unter Verwendung desselben additiven Fertigungsverfahrens gefertigt werden.

Es sei angemerkt, dass die ersten und zweiten Bauteile jeweils individuell und unabhängig voneinander gefertigt werden können oder auch in Abhängigkeit voneinander. Beispielswese können die ersten und zweiten Bauteile zunächst jeweils mittels des entsprechenden additiven Fertigungsverfahrens hergestellt und gegebenenfalls jeweils noch mit weiteren Bauteilen zu einem entsprechenden Modul verbunden werden. Anschließend können die ersten und zweiten Bauteile bzw. die jeweiligen Module miteinander verbunden werden. Ferner ist es auch denkbar, dass beispielsweise das wenigstens eine erste Bauteil zunächst mittels des ersten additiven Fertigungsverfahrens separat hergestellt und gegebenenfalls mit weiteren Bauteilen zu einem Modul verbunden wird. Beispielsweise kann das wenigstens eine zweite Bauteile dann mittels des zweiten additiven Fertigungsverfahrens auch direkt auf bzw. an das wenigstens eine erste Bauteil oder das jeweilige Modul gefertigt werden und somit im Zuge ihrer Herstellung direkt mit dem wenigstens einen ersten Bauteil verbunden werden.

Es versteht sich, dass ferner weitere Bauteile der technischen Vorrichtung jeweils mittels weiterer additiver Fertigungsverfahren hergestellt werden können. So kann beispielsweise wenigsten ein drittes Bauteil zumindest zum Teil unter Verwendung eines dritten additiven Fertigungsverfahrens hergestellt werden, wenigstens ein viertes Bauteil zumindest zum Teil unter Verwendung eines vierten additiven Fertigungsverfahrens hergestellt usw.

Vorzugsweise wird als das erste additive Fertigungsverfahren oder als das zweite additive Fertigungsverfahren ein selektives Laserschmelzen (engl.: "selective laser melting", SLM) durchgeführt. Im Zuge dessen wird ein Werkstoff beispielsweise in Pulverform oder in Form von Drähten oder Bändern aufgebracht und mit einem Laserstrahl beaufschlagt. Der jeweilige Werkstoff wird auf diese Weise insbesondere einem Schmelzprozess unterzogen, um verfestigt zu werden. Nach Erzeugen einer Schicht kann die nächste Schicht auf analoge Weise erzeugt werden.

Als erstes oder zweites additives Fertigungsverfahren kann ferner vorzugsweise ein Lichtbogendrahtauftragschweißen (engl.: "Wire Arc Additive Manufacturing", WAAM) durchgeführt werden, wobei einzelne Schichten insbesondere mit Hilfe eines abschmelzenden Drahtes oder Bandes und eines Lichtbogens erzeugt werden. Zu diesem Zweck können Schweißbrenner, beispielsweise zum Metallschutzgasschweißen, verwendet werden, wobei zwischen dem Schweißbrenner und dem jeweiligen herzustellenden Bauteil ein Lichtbogen brennt. Ein entsprechender Werkstoff wird z.B. in Form eines Drahtes oder Bandes kontinuierlich nachgeführt und durch den Lichtbogen aufgeschmolzen. Dabei bilden sich schmelzflüssige Tropfen, welche auf das herzustellende Bauteil übergehen und fest mit diesem verbunden werden. Der jeweilige Werkstoff kann beispielsweise als eine abschmelzende Drahtelektrode des Schweißbrenners zugeführt werden, wobei der Lichtbogen zwischen dieser Drahtelektrode und dem Bauteil brennt. Ebenso ist es denkbar, den jeweiligen Werkstoff in Form eines zusätzlichen Drahtes zuzuführen, welcher von dem Lichtbogen des Schweißbrenners aufgeschmolzen wird.

Vorzugsweise können als erstes bzw. zweites additives Fertigungsverfahren auch ein selektives Lasersintern (engl.: "selective laser sintering", SLS) und/oder ein selektives Elektronenstrahlschmelzen (engl.: "selective electron beam melting", SEBM) und/oder eine Stereolithographie (SL) und/oder eine Schmelzschichtung (engl.: "fused deposition modeling", FDM, oder "fused filament fabrication", FFF) und/oder ein Kaltspritzen (engl.: "cold spray", CS) durchgeführt werden.

Vorteilhafterweise ist das wenigstens eine erste Bauteil ein inneres bzw. innenliegendes Bauteil der technischen Vorrichtung. Besonders vorteilhaft bildet das wenigstens eine erste Bauteil eine innere Struktur der technischen Vorrichtung. Insbesondere wird das wenigstens eine erste Bauteil in einem Inneren der technischen Vorrichtung angeordnet, d.h. insbesondere innerhalb eines Gehäuses bzw. innerhalb eines Mantels, Rands, Rahmens usw. der technischen Vorrichtung. Das wenigstens eine erste Bauteil ist somit zweckmäßigerweise von weiteren Bauteilen umgeben, insbesondere von dem wenigstens einen zweiten Bauteil. Besonders zweckmäßig wird das wenigstens eine zweite Bauteil zumindest teilweise an dem wenigstens einen ersten Bauteil bzw. zumindest teilweise um das wenigstens eine erste Bauteil herum angeordnet.

Insbesondere sind derartige innere Bauteile für den Betrieb der technischen Vorrichtung vorgesehen und sind beispielsweise an der Durchführung eines entsprechenden technischen Prozesses oder Teilprozesses beteiligt. Innere Bauteile müssen insbesondere anderen Belastungen und Kräften standhalten als z.B. äußere Bauteile, welche beispielsweise zum mechanischen Zusammenhalt der technischen Vorrichtung dienen können. Mittels des ersten additiven Fertigungsverfahrens kann das wenigstens eine erste Bauteil daher mit individuell an derartige Belastungen angepassten Eigenschaften gefertigt werden.

Vorzugsweise ist das wenigstens eine erste Bauteil zum Durchführen eines technischen Prozesses innerhalb der technischen Vorrichtung vorgesehen bzw. ausgestaltet bzw. ausgebildet. Vorzugsweise ist das wenigstens eine erste Bauteil zum Durchführen einer thermodynamischen Wechselwirkung innerhalb der technischen Vorrichtung vorgesehen, weiter vorzugsweise zum Durchführen eines Wärmetauschs. Je nach Art des durchzuführenden Prozesses muss das wenigstens eine erste Bauteil individuellen Belastungen standhalten, beispielsweise hohen Temperaturen, Drücken usw. Durch das erste additive Fertigungsverfahren kann das wenigstens eine erste Bauteil an diese Belastungen angepassten werden.

Insbesondere kann das wenigstens eine erste Bauteil mittels des ersten additiven Fertigungsverfahrens beispielsweise mit spezieller Form und Struktur erzeugt werden, um den entsprechenden technischen Prozess zu optimieren, beispielsweise um die zugrunde liegende Thermodynamik zu optimieren. Beispielsweise können zu diesem Zweck entsprechende Simulationen durchgeführt werden, z.B. numerische Strömungssimulationen (Computational Fluid Dynamics, CFD), um eine entsprechende Form und Struktur zu bestimmen.

Gemäß einer bevorzugten Ausführungsform wird das wenigstens eine erste Bauteil durch das erste additive Fertigungsverfahren mit hoher Druckfestigkeit hergestellt, insbesondere mit höherer Druckfestigkeit als das wenigstens eine zweite Bauteil. Insbesondere kann das wenigstens eine erste Bauteil somit hohen Druckbeaufschlagung standhalten und kann zweckmäßigerweise an hohe thermische bzw. thermodynamische Belastungen im Inneren der technischen Vorrichtung bzw. beim Durchführen des entsprechenden technischen Prozesses angepasst werden.

Besonders bevorzugt wird als das erste additive Fertigungsverfahren ein selektives Laserschmelzen (engl.: "selective laser melting", SLM) durchgeführt. Mittels dieses Fertigungsverfahrens lassen sich insbesondere filigrane, dreidimensionale Strukturen herstellen, die trotz flacher, platter Bauform dennoch hohen Druckbeaufschlagungen standhalten können und hohe Druckfestigkeit und geringe Sprödigkeit aufweisen.

Vorteilhafterweise ist das wenigstens eine zweite Bauteil ein äußeres bzw. außenliegendes Bauteil der technischen Vorrichtung. Insbesondere umgibt bzw. umrandet das zweite Bauteil weitere, innere Bauteile der technischen Vorrichtung, insbesondere das wenigstens eine erste Bauteil, und stellt beispielsweise eine Außenseite bzw. Oberfläche der technischen Vorrichtung dar. Besonders vorteilhaft bildet das wenigstens eine zweite Bauteil einen Mantel und/oder einen Rand und/oder einen Rahmen bzw. eine Umschließung, Ummantelung, Umrandung usw. der technischen Vorrichtung. Insbesondere dient ein derartiges äußeres Bauteil zum mechanischen Zusammenhalt der technischen Vorrichtung und kann daher beispielsweise hohen mechanischen Belastungen und Spannungen ausgesetzt sein. Somit muss ein äußeres Bauteil insbesondere anderen Belastungen standhalten als ein inneres Bauteil und wird besonders zweckmäßig mittels des zweiten additiven Fertigungsverfahrens mit individuell an derartige Belastungen angepassten Eigenschaften hergestellt.

Vorzugsweise ist das wenigstens eine zweite Bauteil ein integritätsbildendes und/oder drucktragendes Bauteil. Insbesondere ist das zweite Bauteil als Umschließung bzw.

Mantel mechanischen Belastungen und Spannungen wie Scherkräften, Zugkräften usw. ausgesetzt. Für das zweite Bauteil ist es daher insbesondere von Bedeutung, Stabilität, Integrität und mechanischen Zusammenhalt der technischen Vorrichtung gewährleisten zu können.

Gemäß einer besonders bevorzugten Ausführungsform wird das wenigstens eine zweite Bauteil durch das zweite additive Fertigungsverfahren mit hoher Bruchdehnung hergestellt, insbesondere mit höherer Bruchdehnung als das wenigstens eine erste Bauteil. Das zweite Bauteil besitzt somit besonders zweckmäßig gute Dehnungswerte und kann insbesondere hohen mechanischen Belastungen und mechanischen Spannungen standhalten.

Besonders bevorzugt wird als das zweite additive Fertigungsverfahren ein Lichtbogendrahtauftragschweißen (engl.: "Wire Arc Additive Manufacturing", WAAM) durchgeführt. Mittels selbigem lassen sich insbesondere spannungsoptimierte Bauteile mit guten Dehnungswerten und hoher Bruchdehnung sowie ferner insbesondere mit freien Konturen und optimierten mechanischen Eigenschaften erzeugen.

Die vorliegende Erfindung eignet sich für eine Vielzahl verschiedener Anwendungsbereiche und zur Herstellung von verschiedenen technischen Vorrichtungen der Verfahrens-, Regelungs- und/oder Steuerungstechnik. Gemäß einer besonders vorteilhaften Ausführungsform ist die technische Vorrichtung eine verfahrenstechnische Vorrichtung, vorzugsweise ein Druckbehälter, eine Kolonne, ein statischer Mischer, ein Filter usw. Besonders zweckmäßig ist das erste Bauteil dabei jeweils ein inneres bzw. innenliegendes Bauteil, welches für die Durchführung eines entsprechenden verfahrenstechnischen Prozesses, insbesondere eines entsprechenden thermodynamischen Prozesses, vorgesehen ist und das zweite Bauteil ist ein äußeres bzw. außenliegendes Bauteil, insbesondere ein Teil eines Gehäuses, Mantels usw.

Gemäß einer besonders bevorzugten Ausführungsform ist die technische Vorrichtung ein Wärmetauscher, beispielsweise ein Geradrohrwärmetauscher, ein Plattenwärmetauscher oder ein Lamellen-Plattenwärmetauscher bzw. Rippen-Plattenwärmetauscher (engl.: "Plate Fin Heat Exchanger", PFHE), ferner beispielsweise ein gelöteter Lamellen-Plattenwärmetauscher aus Aluminium ("Brazed Aluminium Plate-Fin Heat Exchangers", PFHE; Bezeichnungen gemäß der deutschen und englischen Ausgabe der ISO 15547-2:3005). Ein derartiger Plattenwärmetauscher weist insbesondere eine Vielzahl von stapelförmig angeordneten Trennplatten und Lamellen auf, sowie Deckbleche, Randleisten bzw. Sidebars, Verteiler bzw. Header. Ferner sind Rohrstücke bzw. Rohrleitungen zum Zu- und Abführen einzelner Medien vorgesehen. Einzelne oder mehrere dieser Bauteile werden vorteilhafterweise als entsprechende erste bzw. zweite Bauteile mittels des entsprechenden ersten bzw. zweiten additiven Fertigungsverfahrens hergestellt.

Auf herkömmliche Weise wird ein derartiger Wärmetauscher zumeist aus Aluminium hartgelötet. Dabei werden einzelne Wärmeaustauschpassagen, umfassend Strukturbleche mit Lamellen, weitere Strukturbleche mit Verteilerlamellen, Deckbleche und Sidebars, jeweils mit Lot versehen, aufeinander gestapelt bzw. entsprechend angeordnet und in einem Ofen erwärmt. Auf den in dieser Weise hergestellten Wärmetauscherblock werden Header und Stutzen aufgeschweißt. Zur Herstellung von Strukturblechen mit Lamellen werden herkömmlicherweise zumeist ebene Bleche durch Umformverfahren mit einer Welligkeit versehen. Die Header werden herkömmlicherweise oftmals durch Halbzeuge bzw. unter Verwendung von halbzylindrischen Strangpressprofilen hergestellt, die auf die erforderliche Länge gebracht und dann auf den Wärmetauscherblock aufgeschweißt werden. Derartige Fertigungsprozesse sind zumeist jedoch sehr komplex, von vielen Parametern beeinflusst und erfordern umfangreiche Erfahrungen. Das Herstellen von Strukturblechen mittels Umformverfahren sowie das Herstellen von Headern durch Halbzeuge können oftmals aufwendig und mit hohen Kosten verbunden sein. Beispielsweise können sich bei kleineren, kompakten Wärmetauschern somit besonders hohe Kosten für die Herstellung pro m³ Wärmetauschervolumen ergeben. Header können unter Verwendung von Halbzeugen oftmals nur sehr aufwendig oder gar nicht spannungsoptimiert konstruiert werden. Durch Umformwerkzeuge lassen sich ferner Strukturbleche oftmals nur mit einer festgelegten geometrischen, wenig individualisierbaren Gestaltung herstellen sowie gegebenenfalls nur mit beschränkter Wärmeaustauschbarkeit und Fluidführung. Im Gegensatz dazu lassen sich derartige Bauteile eines Wärmetauschers mittels der entsprechenden additiven Fertigungsverfahren im Rahmen des vorliegenden Verfahrens effektiver herstellen, insbesondere kostengünstig, aufwandsarm und mit optimierten Eigenschaften.

Gemäß einer besonders vorteilhaften Ausführungsform der Erfindung werden als das wenigstens eine erste Bauteil wenigstens ein Blech bzw. Strukturblech mit Lamellen hergestellt und als das wenigstens eine zweite Bauteil wenigstens ein Verteiler bzw. Header und/oder wenigstens ein Stutzen und/oder wenigstens eine Randleiste bzw. Sidebar und/oder wenigstens ein Deckblech. Besonders zweckmäßig werden im Zuge der Herstellung des Wärmetauschers somit die für die Funktion der Wärmeübertragung notwendigen Strukturbleche mit Lamellen bzw. mit Fins oder Fin-ähnlichen Strukturen und die integritätstragenden Bauteile des Mantels bzw. der Umschließung des Wärmetauschers voneinander getrennt bzw. entkoppelt und jeweils mittels individuellen additiven Fertigungsverfahren gefertigt, um für den jeweiligen Anwendungszweck optimierte Eigenschaften zu erreichen. Ferner lassen sich der Wärmetauscher bzw. dessen Bauteile durch die additiven Fertigungsverfahren flexibel aus unterschiedlichsten Metallen fertigen, z.B. AI, Ni, Fe, Cu, Ti. Der Wärmetauscher kann somit beispielsweise flexibel abhängig von vorgegebenen Anforderung oder gestellten Kundenwünschen gefertigt werden.

Besonders vorteilhaft wird als das erste additive Fertigungsverfahren zum Herstellen des wenigstens einen Strukturblechs mit Lamellen ein selektives Laserschmelzen (SLM) durchgeführt. Für die innere Struktur des Wärmetauschers wird vorteilhafterweise die SLM Fertigungsmethode verwendet, da mittels selbigem zweckmäßigerweise filigrane, dreidimensionale Strukturen erzeugt werden können, um die Thermodynamik z.B. anhand von CFD- Simulationen zu optimieren.

Als das zweite additive Fertigungsverfahren zum Herstellen des wenigstens einen Verteilers und/oder des wenigstens einen Stutzens und/oder der wenigstens einen Randleiste und/oder des wenigstens einen Deckblechs wird besonders vorteilhaft ein Lichtbogendrahtauftragschweißen (WAAM) durchgeführt. Für die drucktragende Umschließung und für die Header, Stutzen usw. wird somit vorteilhafterweise ein WAAM Verfahren angewendet, da damit eine freie Kontur und optimierte mechanische Eigenschaften erreicht werden können. Zudem ist eine regelwerkstechnische Qualifikation bei diesem Verfahren insbesondere einfacher, da es dafür anpassbare Regelwerke und CodeCases gibt, z.B. den ASME Code Case N740-2.

Merkmale und Vorteile des erfindungsgemäßen Wärmetauschers ergeben sich aus den obigen Erläuterungen bezüglich des erfindungsgemäßen Verfahrens in analoger Art und Weise.

Die Erfindung wird nachfolgend unter Bezugnahme auf die beigefügten Zeichnungen näher erläutert, welche die vorliegende Erfindung und ihre Merkmale gegenüber dem Stand der Technik veranschaulichen.

### Kurze Beschreibung der Zeichnungen

Figur 1 zeigt in vereinfachter isometrischer Darstellung eine technische Vorrichtung, die gemäß einer bevorzugten Ausführungsform eines erfindungsgemäßen Verfahrens hergestellt werden kann.
Figur 2 zeigt eine bevorzugte Ausführungsform eines erfindungsgemäßen Verfahrens in Form eines stark vereinfachten schematischen Ablaufplans.

### Ausführungsform(en) der Erfindung

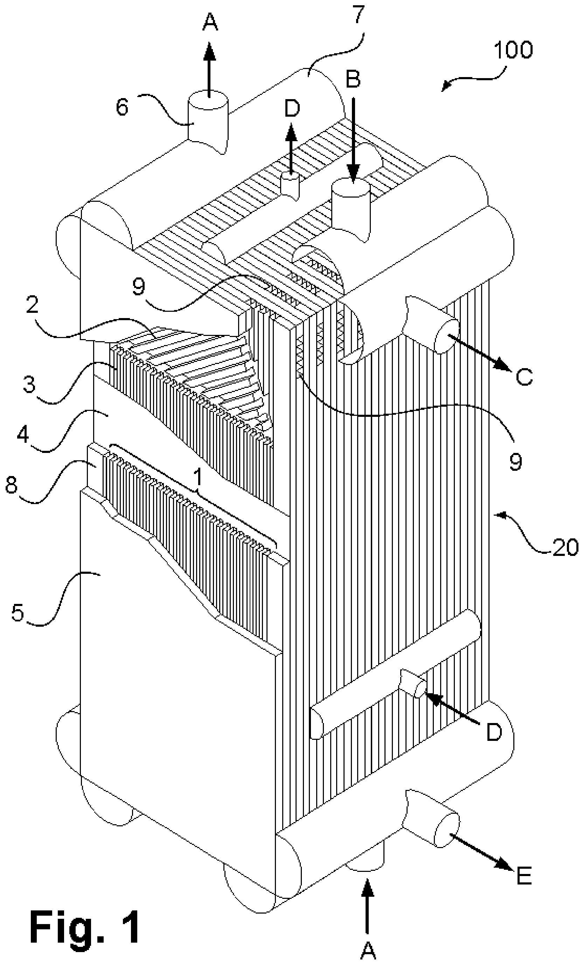

In Figur 1 ist eine technische Vorrichtung 100 schematisch dargestellt, die gemäß einer bevorzugten Ausführungsform des erfindungsgemäßen Verfahrens hergestellt werden kann.

Bei der technischen Vorrichtung 100 handelt es sich im vorliegenden Beispiel um eine verfahrenstechnische Vorrichtung in Form eines Wärmetauschers, beispielsweise eines (hart-) gelöteten Rippen-Platten-Wärmetauscher aus Aluminium (Brazed Aluminium Plate-Fin Heat Exchangers, PFHE; Bezeichnungen gemäß der deutschen und englischen Ausgabe der ISO 15547-2:3005). Es versteht sich, dass "Aluminium" dabei auch eine Aluminiumlegierung bezeichnen kann.

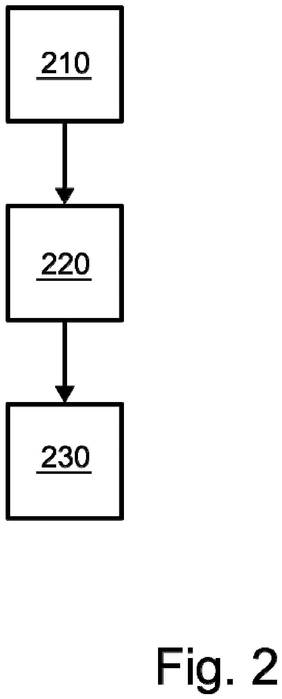

Gelötete Rippen-Platten-Wärmetauscher aus Aluminium sind in Figur 2 der erwähnten ISO 15547-2:3005 sowie auf Seite 5 der Veröffentlichung "The Standards of the Brazed Aluminium Plate-Fin Heat Exchanger Manufacturers' Association" der ALPEMA, 3. Auflage 2010, gezeigt und beschrieben. Die vorliegende Figur 1 entspricht im Wesentlichen den dortigen Abbildungen.

Der in Figur 1 teilweise eröffnet dargestellte Plattenwärmetauscher 100 dient dem Wärmeaustausch von im dargestellten Beispiel fünf verschiedenen Prozessmedien A bis E. Zum Wärmeaustausch zwischen den Prozessmedien A bis E umfasst der Plattenwärmetauscher 100 dabei eine Vielzahl von parallel zueinander angeordneten Trennblechen 4 (in den zuvor genannten Veröffentlichungen, auf die sich auch die nachfolgenden Angaben in Klammern beziehen, im Englischen als Parting Sheets bezeichnet), zwischen denen durch Strukturbleche mit Lamellen 3 (Fins) definierte Wärmeaustauschpassagen 1 für jeweils eines der Prozessmedien A bis E, die dadurch in Wärmeaustausch miteinander treten können, ausgebildet sind.

Die Strukturbleche mit den Lamellen 3 sind typischerweise gefaltet bzw. gewellt ausgebildet, wobei durch die Faltungen bzw. Wellen jeweils Strömungskanäle gebildet werden, wie auch in Figur 1 der ISO 15547-2:3005 gezeigt. Die Bereitstellung der Strukturbleche mit Lamellen 3 bietet im Vergleich zu Plattenwärmetauschern ohne Lamellen den Vorteil einer verbesserten Wärmeübertragung, einer gezielteren Fluidführung und einer Erhöhung der mechanischen (Zug-)Festigkeit. In den Wärmeaustauschpassagen 1 strömen die Prozessmedien A bis E insbesondere durch die Trennbleche 4 getrennt voneinander, können ggf. aber im Fall von perforierten Strukturblechen mit Lamellen 3 durch letztere hindurchtreten.

Die einzelnen Passagen 1 bzw. die Strukturbleche mit den Lamellen 3 sind seitlich jeweils durch sogenannte Sidebars 8 umgeben, die jedoch Einspeise- und Entnahmeöffnungen 9 freilassen. Die Sidebars 8 halten die Trennbleche 4 auf Abstand und sorgen für eine mechanische Verstärkung des Druckraumes. Zum Abschluss an zumindest zwei Seiten dienen insbesondere verstärkt ausgebildete Deckbleche 5 (Cap Sheets), die parallel zu den Trennblechen 4 angeordnet sind.

Mittels sogenannter Header 7, die mit Stutzen 6 (Nozzles) versehen sind, werden die Prozessmedien A bis E über Einspeise- und Entnahmeöffnungen 9 zu- und abgeführt. Im Eingangsbereich der Passagen 1 befinden sich weitere Strukturbleche mit sogenannten Verteilerlamellen 2 (Distributor Fins), die für eine gleichmäßige Verteilung auf die gesamte Breite der Passagen 1 sorgen. In Strömungsrichtung gesehen am Ende der Passage 1 können sich weitere Strukturbleche mit Verteilerlamellen 2 befinden, die die Prozessmedien A bis E aus den Passagen 1 in die Header 7 führen, wo sie gesammelt und über die entsprechenden Stutzen 6 abgezogen werden.

Durch die Strukturbleche mit den Lamellen 3, die weiteren Strukturbleche mit den Verteilerlamellen 2, die Sidebars 8, die Trennbleche 4 und die Deckbleche 5 wird insgesamt ein hier quaderförmiger Wärmetauscherblock 20 gebildet, wobei unter einem "Wärmetauscherblock" hier die genannten Elemente ohne die Header 7 und Stutzen 6 in einem miteinander verbundenem Zustand verstanden werden sollen. Wie in Figur 1 nicht veranschaulicht, kann der Plattenwärmetauscher 100 insbesondere aus Fertigungsgründen aus mehreren entsprechenden quaderförmigen und miteinander verbundenen Wärmetauscherblöcken 20 ausgebildet sein.

Auf herkömmliche Weise wird ein derartiger Plattenwärmetauscher hergestellt, indem die Strukturbleche mit Lamellen und die Strukturbleche mit Verteilerlamellen durch Umformen erzeugt werden, beispielsweise indem ebene Bleche mit einer Welligkeit versehen werden. Die einzelnen Wärmeaustauschpassagen, umfassend die Strukturbleche mit den Lamellen, die weiteren Strukturbleche mit den Verteilerlamellen, die Deckbleche und die Sidebars werden dann, jeweils mit Lot versehen, aufeinander gestapelt bzw. entsprechend angeordnet und in einem Ofen erwärmt. Auf den in dieser Weise hergestellten Wärmetauscherblock werden die Header und die Stutzen aufgeschweißt. Die Header werden herkömmlicherweise zumeist unter Verwendung von halbzylindrischen Strangpressprofilen hergestellt, die auf die erforderliche Länge gebracht und dann auf den Wärmetauscherblock aufgeschweißt werden.

Im Gegensatz dazu werden im Rahmen einer bevorzugten Ausführungsform des erfindungsgemäßen Verfahrens unterschiedliche Bauteile des Wärmetauschers 100 zumindest teilweise unter Verwendung verschiedener additiver Fertigungsverfahren hergestellt. Eine bevorzugte Ausführungsform des erfindungsgemäßen Verfahrens zum Herstellen eines derartigen Plattenwärmetauschers 100 ist in Figur 2 schematisch als ein vereinfachtes Ablaufdiagramm dargestellt und wird nachfolgend erläutert.

In einem Schritt 210 wird wenigstens ein erstes Bauteil zumindest zum Teil unter Verwendung eines ersten additiven Fertigungsverfahrens hergestellt. Beispielsweise werden als erste Bauteile Strukturbleche mit Lamellen 3 und Strukturbleche mit Verteilerlamellen 2 durch selektives Laserschmelzen (engl.: "selective laser melting", SLM) hergestellt. Im Zuge dessen wird jeweils ein beispielsweise pulverförmiger Werkstoff schichtweise aufgebracht und mit einem Laserstrahl einem Schmelzprozess unterzogen, um verfestigt zu werden. Nach Erzeugen einer Schicht wird die nächste Schicht auf analoge Weise erzeugt.

Durch das SLM Verfahren lassen sich insbesondere filigrane, dreidimensionale Strukturen herstellen, die trotz flacher, platter Bauform dennoch hohen Druckbeaufschlagungen standhalten können und hohe Druckfestigkeit und geringe Sprödigkeit aufweisen. Die SLM Fertigungsmethode bietet sich daher in besonders vorteilhafter Weise an, um innere Bauteile bzw. die innere Struktur des Wärmetauschers 100 in Form der Strukturbleche mit den Lamellen 3 bzw. den Verteilerlamellen 2 herzustellen.

In einem Schritt 220 wird wenigstens ein zweites Bauteil zumindest zum Teil unter Verwendung eines zweiten additiven Fertigungsverfahrens hergestellt. Beispielsweise werden als zweite Bauteile Header 7, Stutzen 6, Sidebars 8 und Deckbleche 5 durch Lichtbogendrahtauftragschweißen (engl.: "Wire Arc Additive Manufacturing", WAAM) hergestellt. Im Zuge dessen werden einzelne Schichten dieser Bauteile insbesondere mit Hilfe eines abschmelzenden Drahtes oder Bandes und eines Lichtbogens erzeugt, beispielsweise mittels eines Schweißbrenners, wobei zwischen dem Schweißbrenner und dem herzustellenden Bauteil ein Lichtbogen brennt. Der entsprechende Werkstoff wird z.B. in Form eines Drahtes oder Bandes kontinuierlich nachgeführt und durch den Lichtbogen aufgeschmolzen, wobei sich schmelzflüssige Tropfen bilden und auf das herzustellende Bauteil übergehen.

Da sich mit dem Lichtbogendrahtauftragschweißen insbesondere spannungsoptimierte Bauteile mit guten Dehnungswerten und hoher Bruchdehnung sowie ferner insbesondere mit freien Konturen und optimierten mechanischen Eigenschaften erzeugen lassen, bietet sich dieses additive Fertigungsverfahren besonders vorteilhaft für drucktragende Umschließung in Form der Sidebars 8 und Deckbleche 5 sowie für die Stutzen 6 und Header 7 an.

In einem Schritt 230 wird der Wärmetauscher 100 aus den einzelnen Bauteilen gefertigt bzw. montiert. Zu diesem Zweck werden die in Schritt 210 hergestellten Strukturbleche mit den Lamellen 3 und die Strukturbleche mit den Verteilerlamellen 2, die in Schritt 220 hergestellten Deckbleche 5 und Sidebars 8 sowie ferner Trennbleche 4, jeweils mit Lot versehen, aufeinander gestapelt bzw. entsprechend angeordnet und in einem Ofen erwärmt. Auf den in dieser Weise hergestellten Wärmetauscherblock 20 werden die in Schritt 220 hergestellten Header 7 und Stutzen 6 aufgeschweißt.

Es ist ferner auch denkbar, einzelne oder alle der zweiten Bauteile durch das Lichtbogendrahtauftragschweißen nicht separat, einzeln und unabhängig von weiteren Bauteilen herzustellen, sondern direkt auf anderen Bauteilen zu erzeugen und somit direkt mit diesen Bauteilen zu verbinden. Beispielsweise können Randleisten 8 durch das WAAM Verfahren direkt auf Trennbleche 4 bzw. direkt auf Strukturblechen 2, 3 gefertigt werden. Alternativ oder zusätzlich können beispielsweise die Stutzen 6 und die Header 7 mittels des Lichtbogendrahtauftragschweißens auch direkt auf den Wärmetauscherblock 20 gefertigt werden.

Im Rahmen des vorliegenden Verfahrens werden somit für die Herstellung des Wärmetauschers 100 die für die Funktion der Wärmeübertragung notwendigen Strukturbleche mit Lamellen bzw. lamellenähnlichen Strukturen und die integritätstragenden Bauteile des Mantels bzw. der Umschließung des Wärmetauschers voneinander getrennt bzw. entkoppelt und jeweils mittels individuellen additiven Fertigungsverfahren gefertigt, um für den jeweiligen Anwendungszweck optimierte Eigenschaften zu erreichen. Der Wärmetauscher 100 kann flexibel abhängig von vorgegebenen Anforderungen oder gestellten Kundenwünschen gefertigt werden.

## Patentansprüche

1. Verfahren zum Herstellen einer technischen Vorrichtung (100), wobei die technische Vorrichtung aus wenigstens einem ersten Bauteil (2, 3) und wenigstens einem zweiten Bauteil (5, 6, 7, 8) und insbesondere weiteren Bauteilen (4) gefertigt wird,
**dadurch gekennzeichnet, dass**
das wenigstens eine erste Bauteil (2, 3) zumindest zum Teil unter Verwendung eines ersten additiven Fertigungsverfahrens hergestellt wird (210) und
das wenigstens eine zweite Bauteil (5, 6, 7, 8) zumindest zum Teil unter Verwendung eines zweiten additiven Fertigungsverfahrens hergestellt wird (220).

2. Verfahren nach Anspruch 1, wobei das wenigstens eine erste Bauteil (2, 3) ein inneres Bauteil der technischen Vorrichtung ist und insbesondere eine innere Struktur der technischen Vorrichtung (100) bildet.

3. Verfahren nach Anspruch 1 oder 2, wobei das wenigstens eine erste Bauteil (2, 3) zum Durchführen eines technischen Prozesses innerhalb der technischen Vorrichtung (100) ausgestaltet ist, insbesondere zum Durchführen einer thermodynamischen Wechselwirkung, ferner insbesondere zum Durchführen eines Wärmetauschs.

4. Verfahren nach einem der vorstehenden Ansprüche, wobei das wenigstens eine erste Bauteil (2, 3) durch das erste additive Fertigungsverfahren mit hoher Druckfestigkeit hergestellt wird, insbesondere mit höherer Druckfestigkeit als das wenigstens eine zweite Bauteil (5, 6, 7, 8).

5. Verfahren nach einem der vorstehenden Ansprüche, wobei das wenigstens eine zweite Bauteil (5, 6, 7, 8) ein äußeres Bauteil der technischen Vorrichtung (100) ist und insbesondere einen Mantel und/oder einen Rand und/oder einen Rahmen der technischen Vorrichtung (100) bildet.

6. Verfahren nach einem der vorstehenden Ansprüche, wobei das wenigstens eine zweite Bauteil (5, 6, 7, 8) ein integritätsbildendes und/oder drucktragendes Bauteil ist.

7. Verfahren nach einem der vorstehenden Ansprüche, wobei das wenigstens eine zweite Bauteil (5, 6, 7, 8) durch das zweite additive Fertigungsverfahren mit hoher Bruchdehnung hergestellt wird, insbesondere mit höherer Bruchdehnung als das wenigstens eine erste (2, 3) Bauteil.

8. Verfahren nach einem der vorstehenden Ansprüche, wobei als das erste additive Fertigungsverfahren oder als das zweite additive Fertigungsverfahren ein selektives Laserschmelzen und/oder ein Lichtbogendrahtauftragschweißen und/oder ein selektives Lasersintern und/oder ein selektives Elektronenstrahlschmelzen und/oder eine Stereolithographie und/oder eine Schmelzschichtung und/oder ein Kaltspritzen durchgeführt wird.

9. Verfahren nach einem der vorstehenden Ansprüche, wobei als die technische Vorrichtung eine verfahrenstechnische Vorrichtung hergestellt wird, insbesondere ein Druckbehälter, eine Kolonne, ein statischer Mischer, ein Filter und/oder ein Wärmetauscher (100), insbesondere ein Lamellen-Plattenwärmetauscher.

10. Verfahren nach einem der vorstehenden Ansprüche, wobei als die technische Vorrichtung ein Wärmetauscher (100) hergestellt wird, insbesondere ein Lamellen-Plattenwärmetauscher, wobei als das wenigstens eine erste Bauteil wenigstens ein Strukturblech mit Lamellen (2, 3) hergestellt wird und wobei als das wenigstens eine zweite Bauteil wenigstens ein Verteiler (7) und/oder wenigstens ein Stutzen (6) und/oder wenigstens eine Randleiste (8) und/oder wenigstens ein Deckblech (5) hergestellt wird.

11. Verfahren nach Anspruch 10, wobei als das erste additive Fertigungsverfahren ein selektives Laserschmelzen durchgeführt wird (210) und wobei als das zweite additive Fertigungsverfahren ein Lichtbogendrahtauftragschweißen durchgeführt wird (220).

12. Technische Vorrichtung (100) umfassend wenigstens ein erstes Bauteil (2, 3) und wenigstens ein zweites Bauteil (5, 6, 7, 8), die gemäß einem Verfahren nach einem der vorstehenden Ansprüche hergestellt ist.

13. Technische Vorrichtung nach Anspruch 12, die als eine verfahrenstechnische Vorrichtung ausgebildet ist, insbesondere als ein Druckbehälter, eine Kolonne, ein statischer Mischer, ein Filter und/oder ein Wärmetauscher (100), insbesondere ein Lamellen-Plattenwärmetauscher.
